# EUROPÄISCHE PATENTANMELDUNG

(11) **EP 3 118 042 A1**
(43) Veröffentlichungstag der Anmeldung: **18.01.2017**
(21) Anmeldenummer: 15177008.8
(22) Anmeldetag: 16.07.2015
(51) Int. Cl.: B60K 15/04, B60K 15/03, B60K 15/035

(54) **ENTLÜFTUNGSVORRICHTUNG**

(71) Anmelder: Magna Steyr Fuel Systems GesmbH, 8261 Sinabelkirchen (AT)
(72) Erfinder: HENDLER, René, 8020 Graz (AT); PALLAVER, Harald, 8143 St. Josef (AT); SCHLACHER, Horst, 8261 Sinabelkirchen (AT); STEINMANN, Dominik, 8223 Stubenberg (AT)
(74) Vertreter: Zangger, Bernd

(57) **Zusammenfassung**

Eine Entlüftungsvorrichtung für einen Kraftstofftank, umfassend einen Entlüftungsnippel (1) und eine Tankkomponente (2) aus Stahl,
wobei der Entlüftungsnippel (1) an der Tankkomponente (2) unmittelbar formschlüssig befestigt ist.

## Beschreibung

### Gebiet der Erfindung

Die vorliegende Erfindung betrifft eine Entlüftungsvorrichtung für einen Kraftstofftank.

### Stand der Technik

Entlüftungsvorrichtungen für Kraftstofftanks sind an sich hinlänglich bekannt und werden insbesondere eingesetzt zur Entlüftung während einer Betankung eines Kraftstofftanks als Betankungsentlüftung oder auch zur Entlüftung während des Betriebs eines Tanks als Betriebsentlüftung.

Für Kraftstofftanks ist seit längerer Zeit die Verwendung von Stahltanks üblich, in jüngerer Zeit auch die Verwendung von Kunststofftanks. Beim Einsatz von Stahltanks und von Tankkomponenten wie Einfüllrohren aus Stahl ist es üblich zur Betankungsentlüftung Entlüftungsnippel aus Stahl direkt auf das Einfüllrohr zu schweißen. Die Verwendung von Entlüftungsnippeln aus Kunststoff ist in diesem Fall problematisch. Üblicherweise wird zur Befestigung eines Kunststoffnippels eine Nippelaufnahme aus Stahl an das Einfüllrohr oder die entsprechende Tankkomponente geschweißt.

### Zusammenfassung der Erfindung

Es ist eine Aufgabe der Erfindung, eine Entlüftungsvorrichtung für einen Kraftstofftank anzugeben, die einfach und kostengünstig herstellbar ist und dabei flexibel in Hinsicht auf die verwendeten Materialien ist.

Die Lösung der Aufgabe erfolgt durch eine Entlüftungsvorrichtung für einen Kraftstofftank, umfassend einen Entlüftungsnippel und eine Tankkomponente aus Stahl, wobei der Entlüftungsnippel an der Tankkomponente unmittelbar formschlüssig befestigt ist.

Erfindungsgemäß ist ein Entlüftungsnippel nicht stoffschlüssig mit der Tankkomponente, insbesondere einem Einfüllrohr, verbunden, insbesondere nicht verschweißt, sondern direkt an dieser Komponente, insbesondere direkt am Einfüllrohr bzw. Einfüllkopf formschlüssig verbunden. Die Verwendung von aufwendigen Aufnahme-Zwischenstücken entfällt hierdurch. Der Entlüftungsnippel kann aus einem beliebigen Material hergestellt sein, insbesondere aus Kunststoff.

Bevorzugt ist die Tankkomponente ein Einfüllrohr oder ein Einfüllstutzen oder ein Einfüllkopf. Die Tankkomponente kann auch ein Behälter des Kraftstofftanks aus Stahl sein.

Die formschlüssige Befestigung ist vorzugsweise eine Schnappverbindung oder eine Bajonettverbindung oder eine Schraubverbindung.

Bevorzugt sind an einem Ende des Entlüftungsnippels, zur unmittelbar formschlüssigen Befestigung an der Tankkomponente, Schnapphaken oder Bajonettköpfe ausgebildet, oder ein Gewinde, zum Eingriff in entsprechende Gegenelemente der Tankkomponente. Besonders bevorzugt sind an diesem Ende des Entlüftungsnippels zumindest drei oder vier Schnapphaken oder Bajonettköpfe ausgebildet und am Umfang des bevorzugt mit rundem Querschnitt ausgebildeten Endes des Entlüftungsnippels verteilt.

Vorzugsweise ist zwischen dem Entlüftungsnippel und der Tankkomponente zumindest ein Dichtelement angeordnet, insbesondere zumindest eine Ringdichtung.

Bevorzugt ist am Entlüftungsnippel ein ringförmig umlaufender Flansch ausgebildet, an dessen der Tankkomponente zugewandten Seite das zumindest eine Dichtelement ringförmig umlaufend angeordnet ist und gegen eine ringförmige Fläche der Tankkomponente dichtet. Die ringförmige Fläche der Tankkomponente kann insbesondere durch einen Rand einer Öffnung in der Tankkomponente zur Aufnahme des Endes des Entlüftungsnippels gebildet sein.

Der ringförmig umlaufende Flansch ist vorzugsweise vom Ende des Entlüftungsnippels an welchem die Schnapphaken oder Bajonettköpfe oder das Gewinde ausgebildet sind, beabstandet. Die ringförmige Fläche der Tankkomponente liegt dann bevorzugt auf einer, um die Öffnung der Tankkomponente zur Aufnahme des Endes des Entlüftungsnippels ausgebildeten ringförmigen Erhebung.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer erfindungsgemäßen Entlüftungsvorrichtung mit Schnapphaken.
- Fig. 2: ist eine dreidimensionale Darstellung der Entlüftungsvorrichtung gemäß Fig. 1.
- Fig. 3: ist eine Schnittansicht einer erfindungsgemäßen Entlüftungsvorrichtung mit Bajonettverschluss.
- Fig. 4: ist eine Schnittansicht einer erfindungsgemäßen Entlüftungsvorrichtung gemäß Schnitt C-C der Fig. 3.
- Fig. 5: ist eine Schnittansicht gemäß Fig. 3 und Fig. 4 der Tankkomponente ohne befestigtem Entlüftungsnippel.
- Fig. 6: ist eine dreidimensionale Darstellung der Entlüftungsvorrichtung gemäß Fig. 3 und Fig. 4.

### Detaillierte Beschreibung der Erfindung

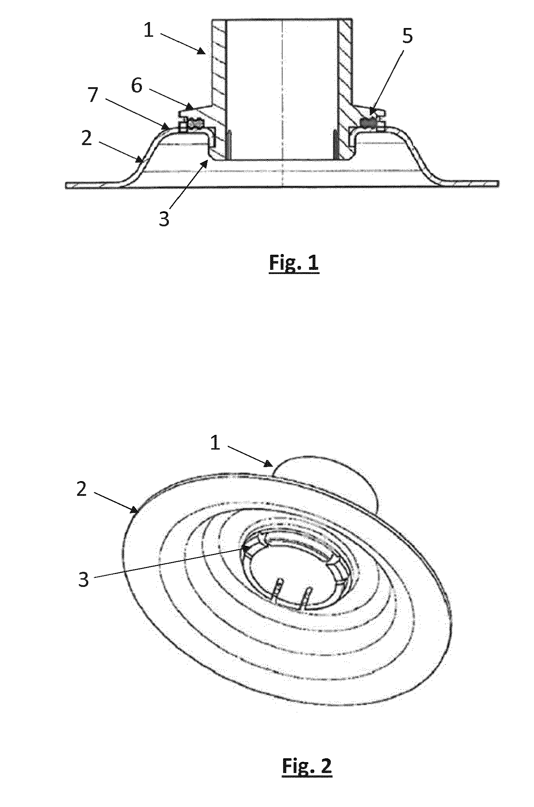

In den Fig. 1 und 2 ist eine erste Ausführungsform einer erfindungsgemäßen Entlüftungsvorrichtung für einen Kraftstofftank dargestellt, mit einem Entlüftungsnippel 1 der an einer Tankkomponente 2 aus Stahl, nämlich einem Stahl-Einfüllrohr befestigt ist. Der Entlüftungsnippel 1 ist unmittelbar mittels eines Schnappverschlusses am Einfüllrohr befestigt.

An einem Ende des Entlüftungsnippels 1 sind zur formschlüssigen Befestigung an der Tankkomponente 2 drei Schnapphaken 3 gleichmäßig über den Umfang des zylinderförmigen Entlüftungsnippels 1 verteilt. Die Schnapphaken 3 schnappen an der Unterseite eines in Einsteckrichtung umgebogenen Randes der Öffnung zur Aufnahme des Entlüftungsnippels 1 am Einfüllrohr ein. Der in Einsteckrichtung umgebogene Rand der Tankkomponente 2 bildet den Abschluss einer ringförmigen Fläche 7, die als ringförmige Erhebung des Einfüllrohres im Bereich der Steckverbindung ausgebildet ist. Diese ringförmige Fläche 7 liegt über ringförmige Dichtelemente 5 an einem ebenfalls ringförmigen Flansch 6 des Entlüftungsnippels 1 an. Zur Aufnahme des umgebogenen Randes der Tankkomponente 2 weist der Entlüftungsnippel 1 zwischen Schnapphaken 3 und ringförmigem Flansch 6 einen Abstand auf.

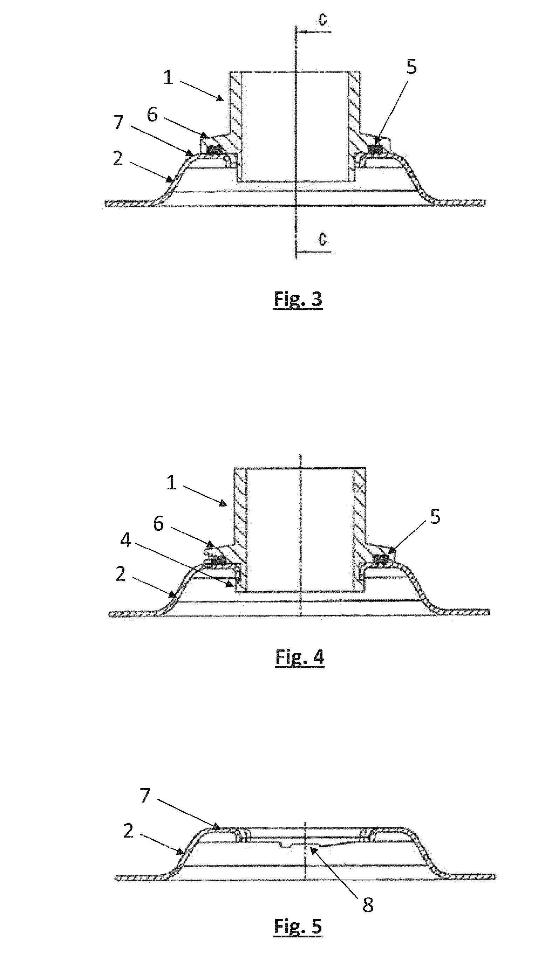

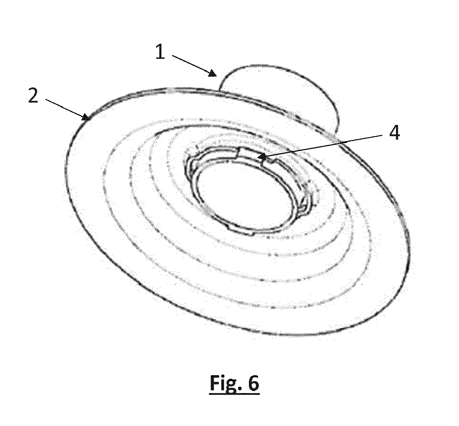

Die erfindungsgemäße Ausführungsform der Fig. 3 bis Fig. 6 unterscheidet sich von der Ausführungsform der Fig. 1 und Fig. 2 dadurch, dass anstelle der Schnapphaken 3 nun Bajonettköpfe 4 am Entlüftungsnippel 1 ausgebildet sind. Zur Herstellung einer Bajonettverbindung weist die Tankkomponente 2, insbesondere das Einfüllrohr, eine entsprechende Randkontur im Bereich der Aufnahme-Öffnung als Gegenelement für die Bajonettköpfe 4 auf, mit Rasten 8 zum Einrasten eines jeweiligen Bajonettkopfes 4.

### Bezugszeichenliste

- 1: Entlüftungsnippel
- 2: Tankkomponente
- 3: Schnapphaken
- 4: Bajonettköpfe
- 5: Dichtelement
- 6: ringförmig umlaufender Flansch
- 7: ringförmige Fläche
- 8: Raste

## Patentansprüche

1. Entlüftungsvorrichtung für einen Kraftstofftank, umfassend einen Entlüftungsnippel (1) und eine Tankkomponente (2) aus Stahl, **dadurch gekennzeichnet, dass** der Entlüftungsnippel (1) an der Tankkomponente (2) unmittelbar formschlüssig befestigt ist.

2. Entlüftungsvorrichtung nach Anspruch 1,
**dadurch gekennzeichnet, dass** die Tankkomponente (2) ein Einfüllrohr oder ein Einfüllstutzen oder ein Einfüllkopf ist.

3. Entlüftungsvorrichtung nach zumindest einem der vorhergehenden Ansprüche,
**dadurch gekennzeichnet, dass** die formschlüssige Befestigung eine Schnappverbindung oder eine Bajonettverbindung oder eine Schraubverbindung ist.

4. Entlüftungsvorrichtung nach zumindest einem der vorhergehenden Ansprüche,
**dadurch gekennzeichnet, dass** an einem Ende des Entlüftungsnippels (1), zur unmittelbar formschlüssigen Befestigung an der Tankkomponente (2), Schnapphaken (3) oder Bajonettköpfe (4) ausgebildet sind, oder ein Gewinde.

5. Entlüftungsvorrichtung nach zumindest einem der vorhergehenden Ansprüche,
**dadurch gekennzeichnet, dass** zwischen dem Entlüftungsnippel (1) und der Tankkomponente (2) zumindest ein Dichtelement (5) angeordnet ist, insbesondere zumindest eine Ringdichtung.

6. Entlüftungsvorrichtung nach Anspruch 5,
**dadurch gekennzeichnet, dass** am Entlüftungsnippel (1) ein ringförmig umlaufender Flansch (6) ausgebildet ist, an dessen der Tankkomponente (2) zugewandten Seite das zumindest eine Dichtelement (5) ringförmig umlaufend angeordnet ist und gegen eine ringförmige Fläche (7) der Tankkomponente (2) dichtet.

7. Entlüftungsvorrichtung nach Anspruch 4 und 6,
**dadurch gekennzeichnet, dass** der ringförmig umlaufende Flansch (6) vom Ende des Entlüftungsnippels (1), an welchem die Schnapphaken (3) oder Bajonettköpfe (4) oder das Gewinde ausgebildet sind, beabstandet ist.
